# EUROPÄISCHE PATENTSCHRIFT

(11) **EP 2 753 495 B1**
(45) Veröffentlichungstag und Bekanntmachung des Hinweises auf die Patenterteilung: **11.12.2019**
(21) Anmeldenummer: 12759006.5
(22) Anmeldetag: 27.08.2012
(51) Int. Cl.: B60N 2/28

(54) **BEFESTIGUNGSVORRICHTUNG FÜR EINEN KINDERSITZ IN EINEM KRAFTFAHRZEUG**
ANCHORING ARRANGEMENT FOR A CHILD SEAT MOUNTABLE IN A CAR SEAT
DISPOSITIF DE FIXATION POUR UN SIÈGE ENFANT DE VÉHICULE AUTOMOBILE

(30) Priorität: 06.09.2011 DE 102011112601
(43) Veröffentlichungstag der Anmeldung: 16.07.2014
(73) Patentinhaber: Volkswagen Aktiengesellschaft, 38440 Wolfsburg (DE)
(72) Erfinder: EFFENBERGER, Witali, 38176 Wendeburg (DE)
(86) Internationale Anmeldenummer: PCT/EP2012/003595
(87) Internationale Veröffentlichungsnummer: WO 2013/034254

(56) Entgegenhaltungen:
- DE-A1-102007 003 288
- JP-A- H0 911 847
- US-A1- 2007 182 195

## Beschreibung

Die Erfindung betrifft eine Befestigungsvorrichtung für einen Kindersitz in einem Kraftfahrzeug nach dem Oberbegriff des Anspruchs 1.

Eine bekannte Befestigungsvorrichtung (DE 10 2008 009 575 A1) weist ein einteiliges Bügelteil als sogenannter "Top-Tether-Bügel" zur Fixierung an einem Träger einer Rücksitzlehne auf.

Eine solche Befestigungsvorrichtung dient insbesondere dazu, einen oberen Bereich eines Kindersitzes zu sichern, indem ein dort angebrachter Gurt mit einem Befestigungshaken am Bügelteil eingehängt wird. Der Gurt mit dem Haken wird als "Top-Tether" bezeichnet, wobei solche "Top-Tether" insbesondere in den USA und Kanada zur Befestigung von Kindersitzen verwendet werden.

Der bekannte einteilige "Top-Tether-Bügel" ist ein geformtes, flächiges, einteiliges Blechteil und besteht aus zwei Befestigungsabschnitten mit einem dazwischenliegenden Steg, wobei die beiden Befestigungsabschnitte jeweils mit der rückseitigen Trägerstruktur der Rücksitzlehne durch Schweißen verbunden sind. Eine solche Schweißmontage, insbesondere ohne Justierhilfen ist aufwändig und kostenintensiv, zudem ist hier für das Bügelteil keine Abdeckung vorgesehen.

Weiter sind Befestigungsvorrichtungen für denselben Zweck bekannt, die jedoch aufwändige mehrteilige Bügelteile aufweisen (DE 10 2004 015 647 A1; DE 2005 054 299 A1).

Aus der US 2007/182195 A1 ist eine Befestigungsvorrichtung bekannt. Diese weist ein einteiliges Bügelteil auf, das aus einem U-förmigen Bügelelement und einem daran anschließenden Beschlagelement besteht. Das Beschlagelement weist eine Anschlussfläche mit Positionierstiften und einen Abstandsblock auf, der im montierten Zustand am Träger anliegt und durch ein Schraubloch mit dem Träger verschraubbar ist. Aus der DE 10 2007 003 288 A1 ist ein einteiliges Bügelteil bekannt, das aus einem U-förmigen Bügelelement und einem daran anschließenden Beschlagelement besteht. Das Beschlagelement weist eine Anschlussfläche mit einem Schraubloch auf, über die das Bügelteil mit dem Trägerteil verschraubbar ist. Zudem ist an der Anschlussfläche ein Positionierstift ausgebildet, der in eine korrespondierende Positionierausnehmung des Trägers einragt. Aus der gattungsgemäßen JP H09 11 847 A ist eine Anbindungsstruktur für eine Tetherklammer eines Kindersitzes bekannt.

Aufgabe der Erfindung ist es eine Befestigungsvorrichtung für einen Kindersitz in einem Kraftfahrzeug mit einem einteiligen Bügelteil vorzuschlagen, bei der das Bügelteil einfach und prozesssicher montierbar ist.

Die Aufgabe der Erfindung ist durch die Merkmale des Patentanspruches 1 gelöst. Bevorzugte Weiterbildungen der Erfindung sind in den Unteransprüchen offenbart.

Diese Aufgabe wird dadurch gelöst, dass das einteilige Bügelteil aus einem U-förmigen Bügelelement und einem an die U-Schenkel anschließenden Beschlagelement besteht, wobei das Beschlagelement eine auf den Träger im montierten Zustand hin gerichtete Anschlussfläche aufweist. Von dieser Anschlussfläche ragt in Richtung auf den Träger wenigstens ein Positionierstift ab, der in eine durchmesserangepasste Positionierausnehmung des Trägers einsteckbar ist. Zudem ist an der Anschlussfläche versetzt zum Positionierstift wenigstens ein auf den Träger hin gerichteter Abstandsblock angeordnet, der im montierten Zustand am Träger anliegt und durch den das Beschlagelement mit dem Träger verschraubbar ist.

Das Bügelteil ist somit einfach und lagegenau montierbar, indem der Positionierstift in die durchmesserangepasste Positionierausnehmung des Trägers eingesteckt wird. Vorteilhaft wird der Positionierstift nicht als Zylinderteil sondern mit einem Profil ausgebildet, dergestalt, dass beim Einstecken des Positionierstifts dieser als Verdrehsicherung dient und auch die Lagerichtung des Beschlagelements im ersten Montageschritt bereits festlegt.

Weiter ist an der Anschlussfläche versetzt zum Positionierstift wenigstens ein auf den Träger hin gerichteter Abstandsblock angeordnet, der im montierten Zustand am Träger anliegt und durch den das Beschlagelement mit dem Träger verschraubbar ist. Bei einem Abstandsblock ist somit vorteilhaft nur eine Verschraubung erforderlich, da eine weitere Abstützung auch über den Positionierstift erfolgt. Durch die direkte Anlage des Abstandsblocks am Träger, insbesondere an einem hinteren Trägerblech einer Rücksitzlehne ist eine gute Kraftanbindung und Abstützung des Beschlagelements am Träger gewährleistet.

Erfindungsgemäß ist das Beschlagelement ein Flachband-Metallelement aus dem aus einem längsmittleren Bereich der Positionierstift mit einem rechteckigen Durchmesser etwa rechtwinklig zur Anschlussfläche abstehend ausgeklinkt. Ein solcher rechteckiger Positionierstift ist in einem entsprechenden Rechteckloch am Träger zur Lagebestimmung und als Verdrehsicherung einsteckbar.

Am einteiligen Beschlagelement wird vorteilhaft bei einfacher und kostengünstiger Herstellung der Abstandsblock als Abstandshülse aus dem Material des Beschlagelements gezogen und mit einer zentralen Schraube am Träger fixiert. Es wird somit hier ausdrücklich als Abstandshalter keine separate Distanzhülse verwendet, welche als zusätzliches Teil bei ähnlichen bekannten Ausführungen zu einem höheren Herstellungspreis sowie einem höheren Logistik- und Montageaufwand führt.

Zweckmäßig liegt der Abstandsblock bzw. die Abstandshülse im montierten Zustand unterhalb des Positionierstifts am Beschlagelement.

Erfindungsgemäß ist am Beschlagelement an der Anschlussfläche im oberen Bereich benachbart zum Bügelelement ein Abstandshalter angeordnet, der weniger weit von der Anschlussfläche als der Abstandsblock und der Positionierstift abragt. Im montierten Zustand liegt dieser Abstandshalter auf einer Teppichauflage am Träger auf, so dass das Beschlagelement insgesamt im montierten Zustand vom Träger und der Teppichauflage beabstandet gehalten ist.

Einfach und kostengünstig kann auch der Abstandshalter als Abstandsstegteil aus dem Beschlagelement ausgestanzt und etwa flächenparallel zur Anschlussfläche abgekröpft werden. Zur Verbesserung der Optik und als Schutz gegen scharfe Kanten des Beschlagelements wird dieses zweckmäßig mit einer Kunststoff-Kappe abgedeckt.

In einer konkreten vorteilhaften Ausführungsform weist die Kunststoff-Kappe im oberen Bereich ein das Beschlagelement, insbesondere zwischen und neben den Schenkel des U-förmigen Bügelelements übergreifendes Hakenprofil auf. Weiter ist im unteren Bereich wenigstens ein das Beschlagelement hintergreifendes elastisches Klippelement angeordnet. Damit kann die Kunststoffkappe von oben her auf das Beschlagelement aufgesteckt und anschließend einfach und schnell eingeclipst werden. Da das Beschlagelement durch den Abstandsblock bzw. die Abstandshülse sowie den Abstandshalter sowohl vom Träger als auch von einer Teppichauflage beabstandet gehalten ist, kann die Kunststoff-Kappe einfach aufgesetzt werden und sitzt dann ohne Anlagedruck auf dem Beschlagelement, so dass ein Lösen der Kunststoff-Kappe vermieden wird.

Alternativ kann die Kunststoff-Abdeckung als Blendenteil ein seitliches Filmscharnier aufweisen und mit dem Beschlagelement dergestalt verbunden sein, dass das Blendenteil nach der Montage des Beschlagelementes auf diesem zuklappbar ist.

Die Positionierausnehmung und die Schraubaufnahme sollen am Träger so angeordnet sein, dass im montierten Zustand das Bügelelement an der Oberkante der Rücksitzlehne für die Anbringung eines kindersitzseitigen Hakens, insbesondere eines Karabinerhakens übersteht. Diese Stelle kann unter einer mittleren Kopfstütze einer Rücksitzlehne liegen.

Anhand einer Zeichnung wird die Erfindung weiter erläutert.

Es zeigen:
- Fig. 1: eine Ansicht einer fertig montierten Befestigungsvorrichtung,
- Fig. 2: eine perspektivische Ansicht auf die Anschlussfläche eines einteiligen Bügelteils mit aufgesetzter Kunststoff-Kappe,
- Fig. 3: einen Schnitt entlang der Linie A-A aus Fig. 2, und
- Fig. 4: eine perspektivische Ansicht auf ein montiertes Bügelteil ohne Kunststoff-Kappe.

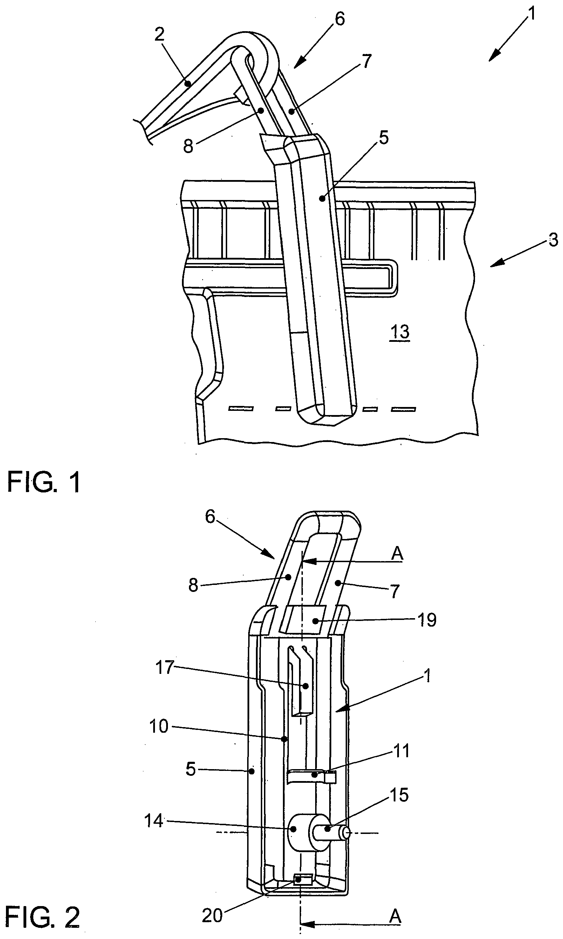

In Fig. 1 ist eine Befestigungsvorrichtung 1 für einen Karabinerhaken 2 gezeigt, der mit einem (nicht dargestellten) Gurt als sogenannter "Top-Tether" mit einem oberen Bereich eines Kindersitzes verbunden ist. Die Befestigungsvorrichtung 1 ist an der Rückseite einer Rücksitzlehne 3 angeordnet und besteht aus einem einteiligen Bügelteil 4, welches mit einer Kunststoffkappe 5 abgedeckt ist.

Wie aus den Fig. 2 bis 4 ersichtlich ist, besteht das Bügelteil 4 aus einem oberen U-förmigen Bügelelement 6 und einem an die U-Schenkel 7, 8 nach unten anschließenden Beschlagelement 9.

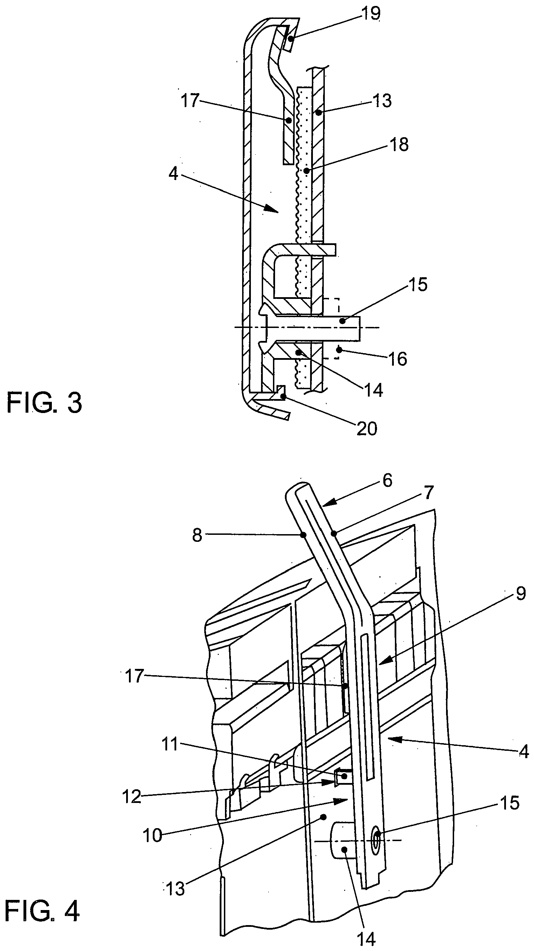

Wie aus den Fig. 1 und 4 ersichtlich überragt das Bügelteil 4 mit seinem Bügelelement 6 die Oberkante der Rücksitzlehne 3, wobei am Bügelelement 6 der Karabinerhaken 2 eingehängt ist.

Das Beschlagelement 9 ist ein Flachband-Metallelement mit einer Anschlussfläche 10, welche im montierten Zustand in Richtung auf den Träger 13, einem Blechteil der Rücksitzlehne 3, weist.

Aus dem Beschlagelement 9 ist in einem längsmittleren Bereich ein Positionierstift 11 rechtwinklig ausgeklinkt, welcher zur Lagepositionierung und als Verdrehsicherung in ein Rechteckloch 12 am Träger 13 eingesteckt ist.

Zudem ist unterhalb des Positionierstifts 11 aus dem Beschlagelement 9 eine Abstandshülse 14 gezogen, die wie insbesondere aus Fig. 3 ersichtlich unmittelbar am Träger 13 anliegt und mit einer zentralen Schraube 15 am Träger 13 gegebenenfalls über eine (strichliert angedeutete) Schweißmutter 16 fixiert ist.

Am Beschlagelement 9 ist in einem oberen längsmittleren Bereich zudem ein Abstandshalter als Abstandsstegteil 17 ausgestanzt und flächenparallel zur Anschlussfläche 10 abgekröpft. Wie insbesondere aus Fig. 3 ersichtlich, liegt das Abstandsstegteil 17 auf einer Teppichauflage 18 des Trägerteils 13 auf und ragt damit um die Stärke der Teppichauflage 18 weniger weit von der Anschlussfläche 10 des Beschlagelements 9 im Vergleich zur Anlagefläche der Abstandshülse 14 ab. Das Beschlagelement 9 ist im fertig montierten Zustand mit der Kunststoff-Kappe 5 abgedeckt, wobei in deren oberem Bereich ein das Beschlagelement 9 zwischen und seitlich der U-Schenkel 7, 8 übergreifendes Hakenprofil 19 geformt ist. Im unteren Bereich der Kunststoff-Kappe 5 weist diese ein das Beschlagelement 9 hintergreifendes elastisches Klippelement 20 auf, so dass die Kunststoff-Kappe 5 von oben her auf das Beschlagelement 9 aufsteckbar und unten zur Herstellung der Klippverbindung andrückbar ist.

## Patentansprüche

1. Befestigungsvorrichtung für einen Kindersitz in einem Kraftfahrzeug,
mit einem einteiligen Bügelteil (4) als Top-Tether-Bügel zur Fixierung an einem Träger (13) einer Rücksitzlehne (3), wobei
das einteilige Bügelteil (4) aus einem U-förmigen Bügelelement (6) und einem an die U-Schenkel (7, 8) anschließenden Beschlagelement (9) besteht,
das Beschlagelement (9) eine auf den Träger (13) im montierten Zustand hin gerichtete Anschlussfläche (10) aufweist,
von der Anschlussfläche (10) in Richtung auf den Träger (13) wenigstens ein Positionsstift (11) abragt, der in eine durchmesserangepasste Positionierausnehmung (12) des Trägers (13) einsteckbar ist,
an der Anschlussfläche (10) versetzt zum Positionierstift (11) wenigstens ein auf den Träger (13) hin gerichteter Abstandsblock (14) angeordnet ist, der im montierten Zustand am Träger (13) anliegt und durch den das Beschlagelement (9) mit dem Träger (13) verschraubbar ist, wobei
am Beschlagelement (9) an der Anschlussfläche (10) im oberen Bereich benachbart zum Bügelelement (6) ein Abstandhalter (17) angeordnet ist, der weniger weit von der Anschlussfläche (10) als der Abstandsblock (14) abragt, **dadurch gekennzeichnet,dass** der Abstandshalter (17) im montierten Zustand auf einer Teppichauflage (18) am Träger aufliegt, so dass das Beschlagelement (9) insgesamt im montierten Zustand vom Träger (3) und der Teppichauflage (18) beabstandet gehalten ist, und das Beschlagelement (9) ein Flachband-Metallelement ist, aus dem aus einem längsmittleren Bereich der Positionsstift (11) mit einem rechteckigen Durchmesser etwa rechtwinklig zur Anschlussfläche (10) abstehend ausgeklinkt ist.

2. Befestigungsvorrichtung nach Anspruch 1, **dadurch gekennzeichnet, dass** der Abstandsblock als Abstandshülse (14) aus dem Beschlagelement (9) gezogen ist und mit einer zentralen Schraube (15) fixierbar ist.

3. Befestigungsvorrichtung nach einem der Ansprüche 1 oder 2, **dadurch gekennzeichnet, dass** der Abstandsblock (14) im montierten Zustand unterhalb des Positionierstifts (11) liegt.

4. Befestigungsvorrichtung nach einem der vorhergehenden Ansprüche, **dadurch gekennzeichnet, dass** der Abstandshalter als Abstandsstegteil (17) aus dem Beschlagelement (9) ausgestanzt und flächenparallel zur Anschlussfläche (10) abgekröpft ist.

5. Befestigungsvorrichtung nach einem der Ansprüche 1 bis 4, **dadurch gekennzeichnet, dass** der Träger (13) ein hinteres Blechteil der Rücksitzlehne (3) ist.

6. Befestigungsvorrichtung nach einem der Ansprüche 1 bis 5, **dadurch gekennzeichnet, dass** das Beschlagelement (9) mit einer Kunststoff-Kappe (5) abgedeckt ist.

7. Befestigungsvorrichtung nach Anspruch 6, **dadurch gekennzeichnet, dass** die Kunststoff-Kappe (5) im oberen Bereich ein das Beschlagelement (9) zwischen und neben den U-Schenkeln (7, 8) des Bügelelements (6) übergreifendes Hakenprofil (19) sowie im unteren Bereich wenigstens ein das Beschlagelement (9) hintergreifendes elastisches Klippelement (20) aufweist.

8. Befestigungsvorrichtung nach Anspruch 6, **dadurch gekennzeichnet, dass** die Kunststoff-Kappe (5) als Blendenteil ein seitliches Filmscharnier aufweist und mit dem Beschlagelement (9) dergestalt verbunden ist, dass das Blendenteil nach der Montage des Beschlagelements (9) auf diesem zuklappbar ist.

9. Befestigungsvorrichtung nach einem der Ansprüche 1 bis 8, **dadurch gekennzeichnet, dass** die Positionierausnehmung (12) und die Schraubaufnahme am Träger (13) so angeordnet sind, dass im montierten Zustand das Bügelelement (6) an der Oberkante der Rücksitzlehne (3) für die Anbringung eines Karabinerhakens (2) übersteht.

## Claims

1. A fastening device for a child seat in a motor vehicle, having a one-piece bracket part (4) as a top-tether bracket for fixing to a support (13) of a rear seat back (3), wherein
the one-piece bracket part (4) consists of a U-shaped bracket element (6) and a fitting element (9) connecting with the U-arms (7, 8),
the fitting element (9) has a connecting surface (10), which, when mounted, faces the support (13),
at least one positioning pin (11) protrudes from the connecting surface (10) in the direction towards the support (13), which positioning pin can be inserted into a diameter-modified positioning recess (12) of the support (13),
at least one spacer block (14) is arranged facing the support (13) offset to the positioning pin (11) on the connecting surface (10), which spacer block when mounted rests against the support (13) and through which the fitting element (9) can be screwed to the support (13), wherein
a spacer (17) is arranged on the fitting element (9) on the connecting surface (10) in the upper region adjacent to the bracket element (6), which spacer protrudes less far from the connecting surface (10) than the spacer block (14), **characterized in that** the spacer (17) when mounted rests on a carpeted overlay (18) on the support, so that the fitting element (9) when mounted is generally kept spaced apart from the support (3) and the carpeted overlay (18), and the fitting element (9) is a flat-strip metal element, from which from a longitudinal middle region the positioning pin (11) with a rectangular diameter is unlatched so as to project approximately at right angles to the connecting surface (10).

2. The fastening device according to Claim 1, **characterized in that** the spacer block is pulled as spacer sleeve (14) from the fitting element (9) and can be fixed with a central screw (15).

3. The fastening device according to any one of Claims 1 or 2, **characterized in that** the spacer block (14) when mounted lies underneath the positioning pin (11).

4. The fastening device according to any one of the preceding claims, **characterized in that** the spacer as spacer web part (17) is punched out of the fitting element (9) and is bent at right angles surface-parallel to the connecting surface (10).

5. The fastening device according to any one of Claims 1 to 4, **characterized in that** the support (13) is a rear sheet metal part of the rear seat back (3).

6. The fastening device according to any one of Claims 1 to 5, **characterized in that** the fitting element (9) is covered with a plastic cap (5).

7. The fastening device according to Claim 6, **characterized in that** the plastic cap (5) in the upper region has a hook profile (19) engaging over the fitting element (9) between and next to the U-arms (7, 8) of the bracket element (6) and in the lower region has at least one elastic clip element (20) engaging behind the fitting element (9).

8. The fastening device according to Claim 6, **characterized in that** the plastic cap (5) as panel part has a lateral film hinge and is connected to the fitting element (9) in such a way that after the mounting of the fitting element (9) the panel part can be closed with a snap on said fitting element.

9. The fastening device according to any one of Claims 1 to 8, **characterized in that** the positioning recess (12) and the screw accommodation on the support (13) are arranged such that when mounted the bracket element (6) protrudes at the upper edge of the rear seat back (3) for the attachment of the snap hook (2).

## Revendications

1. Dispositif de fixation pour un siège pour enfants dans un véhicule automobile, avec une partie à étrier d'une seule pièce (4) en tant qu'étrier à attache supérieure pour la fixation à un support (13) d'un dossier de siège arrière (3),
la partie à étrier d'une seule pièce (4) étant constituée d'un élément d'étrier en forme de U (6) et d'un élément d'armature (9) se raccordant aux branches en U (7, 8),
l'élément d'armature (9) comprenant une surface de raccordement (10) orientée vers le support (13) dans l'état monté,
au moins une goupille de positionnement (11), qui peut être insérée dans un évidement de positionnement (12) adapté au diamètre du support (13), dépassant de la surface de raccordement (10) en direction du support (13),
au moins un bloc d'écartement (14), orienté vers le support (13) étant disposé sur la surface de raccordement (10), de manière décalée par rapport à la goupille de positionnement (11), qui s'appuie, dans l'état monté, contre le support (13) et à l'aide duquel l'élément d'armature (9) peut être vissé avec le support (13),
une entretoise (17) étant disposée sur l'élément d'armature (9) sur la surface de raccordement (10) dans la zone supérieure près de l'élément d'étrier (6), qui dépasse moins de la surface de raccordement (10) que le bloc d'écartement (14), **caractérisé en ce que** l'entretoise (17) repose, dans l'état monté, sur un tapis (18) sur le support, de façon à ce que l'élément d'armature (9) soit globalement maintenu, dans l'état monté, à distance du support (3) et du tapis (18), et l'élément d'armature (9) est un élément métallique à bande plate à partir duquel la goupille de positionnement (11) est dégagée d'une zone longitudinale centrale, avec un diamètre rectangulaire approximativement perpendiculaire à la surface de raccordement (10).

2. Dispositif de fixation selon la revendication 1, **caractérisé en ce que** le bloc d'écartement est tiré, en tant que manchon d'écartement (14), hors de l'élément d'armature (9) et peut être fixé avec une vis centrale (15).

3. Dispositif de fixation selon l'une des revendications 1 ou 2, **caractérisé en ce que** le bloc d'écartement (14) se trouve, dans l'état monté, en dessous de la goupille de positionnement (11).

4. Dispositif de fixation selon l'une des revendications précédentes, **caractérisé en ce que** l'entretoise est estampée à partir de l'élément d'armature (9) sous la forme d'une partie à nervure d'écartement (17) et est coudée de manière parallèle à la surface de raccordement (10).

5. Dispositif de fixation selon l'une des revendications 1 à 4, **caractérisé en ce que** le support (13) est une partie en tôle arrière du dossier du siège arrière (3).

6. Dispositif de fixation selon l'une des revendications 1 à 5, **caractérisé en ce que** l'élément d'armature (9) est recouvert d'un capuchon en matière plastique (5).

7. Dispositif de fixation selon la revendication 6, **caractérisé en ce que** le capuchon en matière plastique (5) comprend, dans la zone supérieure, un profilé à crochet (19) venant en prise avec l'élément d'armature (9) entre et à proximité des branches en U (7, 8) de l'élément d'étrier (6) ainsi que, dans la zone supérieure, au moins un élément de clipsage (20) élastique s'accrochant par-derrière à l'élément d'armature (9).

8. Dispositif de fixation selon la revendication 6, **caractérisé en ce que** le capuchon en matière plastique (5) comprend, en tant que partie de diaphragme, une charnière à film latérale et est relié avec l'élément d'armature (9) de façon à ce que la partie de diaphragme puisse être rabattue après le montage de l'élément d'armature (9) sur celui-ci.

9. Dispositif de fixation selon l'une des revendications 1 à 8, **caractérisé en ce que** l'évidement de positionnement (12) et le logement de vis sont disposés sur le support (13) de façon à ce que, dans l'état monté, l'élément d'étrier (6) soit en porte-à-faux au niveau de l'arête supérieure du dossier de siège arrière (3) pour l'accrochage d'un mousqueton (2).
